# EUROPÄISCHE PATENTSCHRIFT

(11) **EP 0 527 363 B1**
(45) Veröffentlichungstag und Bekanntmachung des Hinweises auf die Patenterteilung: **07.12.1994**
(21) Anmeldenummer: 92112521.7
(22) Anmeldetag: 22.07.1992
(51) Int. Cl.: H05B 7/06

(54) **Gasspülstein für Elektro-Lichtbogenöfen und zugehöriger Elektro-Lichtbogenofen**
Gas flushing plug for electric arc furnaces and related arc furnace
Brique pour levage en gaz pour fours électriques à arc et four électrique à arc

(30) Priorität: 08.08.1991 DE 4126237
(43) Veröffentlichungstag der Anmeldung: 17.02.1993
(73) Patentinhaber: Veitsch-Radex Aktiengesellschaft für feuerfeste Erzeugnisse, A-1040 Wien (AT); Ing. LEONE TAGLIAFERRI & C. S.p.A., I-20154 Milano (IT)
(72) Erfinder: Cappelli, Giorgio, Milano (IT); Pericle, Bosi, Dr., Milano (IT); Vacek, Helmut, A-9721 Weissenstein 88 (AT)
(74) Vertreter: Becker, Thomas, Dr., Dipl.-Ing.

(56) Entgegenhaltungen:
- EP-A- 0 124 490
- FR-A- 2 525 755

## Beschreibung

Die Erfindung betrifft einen Gasspülstein für Elektro-Lichtbogenöfen sowie einen zugehörigen Elektro-Lichtbogenofen. Ein besonders vorteilhafter Anwendungsfall ist dabei auf einen Gasspülstein für einen metallurgischen Elektro-Schmelzofen im Gleichstrombetrieb gerichtet.

Gleichstromöfen (Gleichstrom-Lichtbogenöfen) für metallurgische Schmelzprozesse sind seit langem bekannt. Sie stehen in Konkurrenz zu Elektro-Lichtbogenöfen, die mit Wechselstrom betrieben werden.

Ein Gleichstromofen ist in der Regel wie folgt aufgebaut:
- Im oberen Teil des Ofen (meist im Deckel) befindet sich mindestens eine Lichtbogenelektrode
- der untere Teil (Boden) des Ofens besteht entweder aus einem elektrisch leitenden, feuerfesten Material, wie Graphit oder Metallcarbid (EP 0217 208 A2) oder
- im Ofenboden ist mindestens eine Gegenelektrode (als Kathode geschaltet) angeordnet (EP 0 135 103 B1).

Ein derartiger Gleichstromofen (auch DC-Ofen genannt) weist folgende Vorteile auf:
- Auch bei schwankender Stromversorgung ist die Gefahr, daß der Lichtbogen abreißt, relativ gering.
- Der Strom fließt von der oberen Elektrode durch die Schmelze zur Bodenelektrode. Hierdurch werden elektromagnetische Kräfte in der Schmelze unter dem Lichtbogen erzeugt. Hierdurch entsteht eine Verwirbelung, bei der die Schmelze über den Boden, die Seiten und die Oberfläche zirkuliert, wodurch ihre Homogenität verbessert wird.
- Der Ofen arbeitet relativ geräuscharm.
- Es entstehen aufgrund einer Verringerung der Elektroden-Emissionen weniger Rauchgase.
- Der Energiebedarf ist geringer.

Zur weiteren Optimierung des Schmelzprozesses ist es üblich, Gase, und zwar sowohl Sauerstoff als auch Inertgase, über Lanzen in die Schmelze einzublasen.

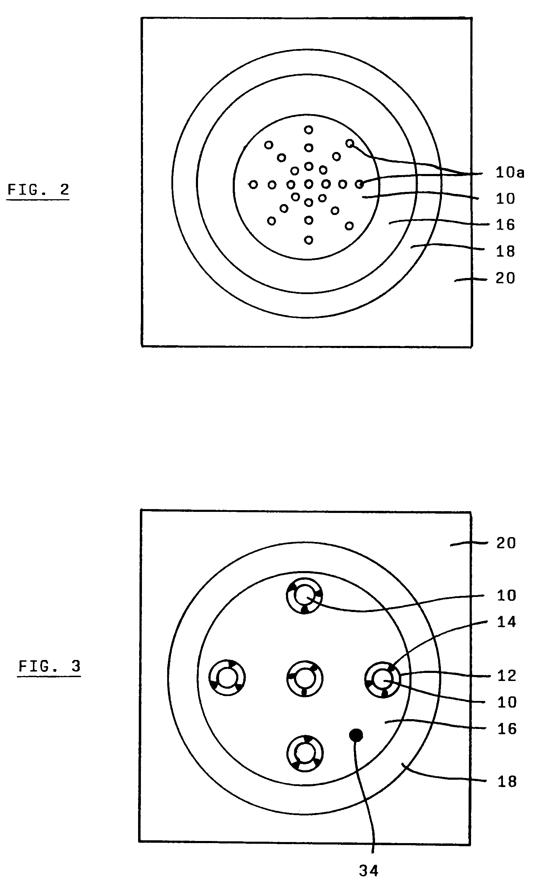

Aus der EP 0 124 490 A1 ist ein Elektroofen bekannt, in dessen Boden zum einen Elektroden (Figur 2: Elektroden 14) und zum anderen Gasspülelemente (Figuren 2, 3: 16, 16′) völlig getrennt voneinander sind.

Der Erfindung liegt die Aufgabe zugrunde, eine Möglichkeit aufzuzeigen, wie Elektro-Lichtbogenöfen, insbesondere solche, die mit Gleichstrom betrieben werden, in ihrem Aufbau und bezüglich ihrer Verfahrenstechnik weiter verbessert werden können. Die Erfindung wird nachstehend anhand eines Gasspülsteins für einen Elektro-Lichtbogenofen im Gleichstrombetrieb und anhand eines zugehörigen Gleichstromofens, und zwar für metallurgische Schmelzprozesse, näher beschrieben. Die Erfindung ist aber nicht auf diese Anwendungsfälle beschränkt. Sie kann ebenso in einem mit Wechselstrom arbeitenden Ofen und für andere Zwecke genutzt werden.

Dabei geht die Erfindung von der Überlegung aus, einen feuerfesten, keramischen Gasspülstein, wie er prinzipiell aus anderen metallurgischen Schmelzgefäßen, wie Pfannen oder dergleichen, bekannt ist, mit einer Elektrode zu verbinden, wie sie als solche bei Gleichstromöfen bisher im Boden eingebaut wird. Demzufolge besteht der Grundgedanke der Erfindung darin, eine Elektrode in einen feuerfesten keramischen Körper zu integrieren, so daß eine Art "Spülelektrode" entsteht. Das Spülgas kann dabei entweder durch den keramischen Körper, die Elektrode und/oder Kanäle oder Schlitze zwischen der Elektrode und dem keramischen Matrixmaterial durch den Spülstein in die Metallschmelze geleitet werden. Der Begriff "Spülgas" schließt dabei auch die gleichzeitige Zuführung von Feststoffen mit einem Trägergas sowie die Zuführung von Fluiden ein (zum Beispiel Kerosin).

Hierdurch wird der Aufbau im Bodenbereich eines Gleichstromofens deutlich vereinfacht. Für das Feuerfestmaterial kann auf konventionelle, preiswertere Qualitäten zurückgegriffen werden, weil nicht mehr das gesamte Feuerfestmaterial elektrisch leitend sein muß wie bei einer Ausführungsform nach der EP 0 217 208 A2. Ein weiterer Vorteil besteht darin, daß eine Gaszuführung über separate Lanzen entfallen kann. Das Behandlungsgas wird - wie dargestellt - über die "Spülelektrode" direkt in die Metallschmelze eingeblasen. Die Gasführung durch den Spülstein sorgt gleichzeitig für eine Kühlung im Elektrodenbereich, so daß eine separate Kühlung entfallen kann. Hierdurch wird gleichzeitig der Elektrodenverschleiß verringert.

Die Erfindung betrifft in ihrer allgemeinsten Ausführungsform einen Gasspülstein für Elektro-Lichtbogenöfen mit
mindestens einer, sich in Spülrichtung des Behandlungsgases innerhalb des feuerfesten Matrixmaterials erstreckenden Elektrode, die am gaseinlaßseitigen Ende des Spülsteins an eine Spannungsquelle anschließbar ist.

Ein solcher Gasspülstein läßt sich in verschiedenen Ausführungsformen realisieren.

Aus herstellungstechnischen Gründen ist es vorteilhaft, wenn die Elektroden stabförmig gestaltet sind. Dabei erstrecken sich die Elektroden vorzugsweise über die gesamte Höhe des Gasspülsteins, also von dessen gaseinlaßseitigem Ende bis zum gasauslaßseitigen Ende.

Im einfachsten Fall kann dies so erfolgen, daß eine stabförmige Elektrode in einem feuerfesten keramischen Aufnahmeteil mit gerichteter oder ungerichteter Porosität konfektioniert wird. Der keramische Aufnahmeteil kann - insbesondere wenn er eine ungerichtete Porosität aufweist - umfangs- und/oder bodenseitig von einem Blechmantel eingefaßt werden.

Ebenso ist es aber auch möglich, das feuerfeste Matrixmaterial mit einer Längsbohrung auszubilden, deren Innendurchmesser größer ist als der Außendurchmesser der Elektrode, so daß nach dem Einsetzen der Elektrode ein Ringspalt verbleibt, durch den später das Behandlungsgas zugeführt wird. Um eine exakte Positionierung der Elektrode innerhalb der Durchbohrung zu erreichen, weist die Durchbohrung vorzugsweise nach innen vorspringende Noppen oder Stege auf, die nach dem Einsetzen der Elektrode diese exakt halten. Die Noppen können beispielsweise beim Gießen des keramischen Aufnahmeteils unmittelbar mit ausgeformt werden. Vorzugsweise wird die Elektrode bodenseitig zusätzlich abgestützt. Die Noppen können aber auch aus einem Metallzylinder ausgeformt werden, der zwischen Elektrode und Feuerfestmaterial eingesetzt wird.

Selbstverständlich ist es möglich, anstelle einer Elektrode auch mehrere Elektroden innerhalb des keramischen Körpers anzuordnen. Vorzugsweise geschieht dies so, daß ein symmetrischer Aufbau entsteht.

Nach einer alternativen Ausführungsform weist die Elektrode eine Zylinderform auf. Die zylinderförmige Elektrode wird dann sowohl außen- wie innenseitig von einem feuerfesten keramischen Material umgeben beziehungsweise ausgefüllt. In diesem Fall kann (auch) das keramische Material als aktiver Spülstein genutzt werden, indem im keramischen Körper beispielsweise gerichtete Poren (Kanäle) ausgebildet werden.

Einzelheiten bekannter keramischer Spülsteine mit gerichteter und ungerichteter Porosität beschreibt die Radex-Rundschau 1988, 481.

Der aktive Spülteil kann aber auch in den Elektroden selbst ausgebildet werden. Zu diesem Zweck weisen die Elektroden mindestens eine, in Längsrichtung verlaufende Durchbohrung auf, so daß wiederum eine Art "gerichtete Porosität" entsteht. Diese Ausführungsform hat den Vorteil, daß eine besonders effektive Kühlung der Elektrode beim Spülen erreicht wird.

Bei dieser Ausführungsform bietet es sich an, einen Gasspülstein mit einer einzigen integrierten Elektrode zu verwenden, die mittig im keramischen Aufnahmekörper festgelegt ist. Die Verbindung von Elektrode und keramischem Körper kann beispielsweise über einen feuerfesten Mörtel erfolgen.

Die Elektrode(n) kann (können) aber auch eine ungerichtete Porosität aufweisen.

Bei allen vorgenannten Beispielen sollte die Elektrode vorzugsweise über die gesamte Höhe des Spülsteins verlaufen. Dies ist aber nicht unbedingt notwendig. So kann die obere Stirnfläche der Elektrode(n) beispielsweise auch mit einer dünnen feuerfesten gasdurchlässigen Schicht abgedeckt sein.

Bezüglich der konkreten Gestaltung stehen dem Fachmann zahlreiche weitere Möglichkeiten zur Verfügung, die teilweise in der nachstehenden Figurenbeschreibung dargestellt werden. In allen Ausführungsformen wird jedoch eine Elektrode in einem keramischen Körper zu einem Gasspülstein (einer Spülelektrode) kombiniert.

Bei der Gestaltung des gaseinlaßseitigen Endes des Spülsteins kann auf bekannte Ausführungsformen zurückgegriffen werden. Hierzu gehört beispielsweise die Ausbildung einer Gasverteilkammer mit einer Gasanschlußleitung. Über die zentrale Gasanschlußleitung wird das Spülgas in die Verteilkammer geführt, so daß ein gleichmäßiger Druck über die effektive Spülfläche erreicht wird. Das Gas strömt dann durch die Poren (Kanäle) zum gasauslaßseitigen Ende und von dort in die Schmelze.

Eine konstruktive Änderung gegenüber einem bekannten Pfannenspülstein besteht darin, daß die Elektrode am gaseinlaßseitigen Ende an eine elektrische Stromversorgung angeschlossen wird, so daß im Bereich einer Gasverteilkammer entsprechende Anschlußmöglichkeiten vorzusehen sind.

Der erfindungsgemäße Ofen weist mindestens eine Lichtbogenelektrode (vorzugsweise im Deckel) und mindestens einen Gasspülstein der vorstehend genannten Art (vorzugsweise im Boden) auf.

Dabei kann der (bodenseitige) Gasspülstein unmittelbar in (gedachter) axialer Verlängerung der Lichtbogenelektrode angeordnet werden.

Es ist aber auch möglich, mehrere Gasspülsteine (im Ofenboden) anzuordnen, was dann vorzugsweise so erfolgt, daß die einzelnen Gasspülsteine in gleichem Abstand zueinander auf einem gedachten Kreis angeordnet sind, dessen Mittelpunkt in einer gedachten axialen Verlängerung der Lichtbogenelektrode liegt.

Der Unterschied gegenüber bekannten Lichtbogenöfen besteht also in der Ausgestaltung und Anordnung der (meist bodenseitigen) Elektrode(n). Im übrigen kann der Ofen unverändert bleiben, wenn man davon absieht, daß aufgrund der beschriebenen Gestaltung auf separate Zuführeinrichtungen für Behandlungsgase (beispielsweise Lanzen) verzichtet werden kann.

Durch die Möglichkeit, ein Behandlungsgas im Elektrodenbereich über die beschriebenen Gasspülsteine in die Metallschmelze eindüsen zu können, wird nicht nur eine zusätzliche Umwälzung der Metallschmelze und damit eine Homogenisierung der Schmelze erreicht. Es wird gleichzeitig eine Elektroden-Kühlung zur Verfügung gestellt und der Elektrodenverschleiß verringert. Insoweit ermöglicht die Verwendung der beschriebenen Gasspül-Elektroden eine Optimierung des Schmelzverfahrens generell.

Weitere Merkmale der Erfindung ergeben sich aus den Unteransprüchen sowie den sonstigen Anmeldungsunterlagen.

Hierzu gehört die Ausbildung des Spülsteins mit einer Einrichtung zur Anzeige des Verschleißgrades des Spülsteins, die in der Elektrode und/oder dem feuerfesten Matrixmaterial angeordnet wird. Ein Ausführungsbeispiel wird nachstehend beschrieben.

Der Spülstein kann fest eingebaut oder wechselbar gestaltet werden. Er kann in einem Lochstein konfektioniert sein.

Die Erfindung wird nachstehend anhand verschiedener Ausführungsbeispiele näher erläutert.

Dabei zeigen, jeweils in stark schematisierter Darstellung,
- Figur 1a:: einen horizontalen Schnitt durch eine erste Ausführungsform eines Gasspülsteins mit integrierter Elektrode,
- Figur 1b:: einen Längsschnitt durch den Spülstein nach Figur 1a,
- Figuren 2-5:: vier Aufsichten auf vier verschiedene weitere Ausführungsformen eines Gasspülsteins mit integrierter Elektrode,
- Figur 6:: die Darstellung eines Gleichstrom-Lichtbogenofens mit angeschlossener Stromversorgung.

In den Figuren sind gleiche oder gleichwirkende Bauteile mit gleichen Bezugsziffern dargestellt.

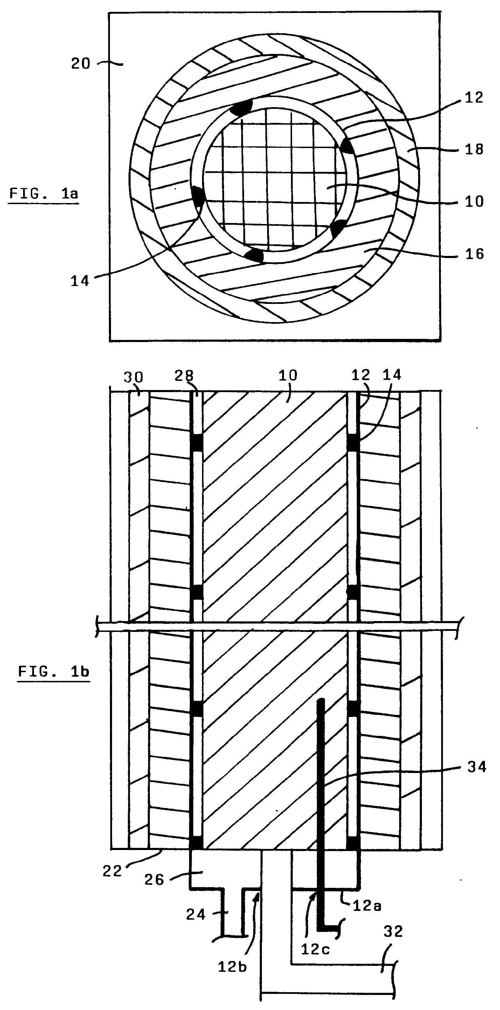

Die Spülelektrode nach Figur 1 besteht aus einer mittigen, stabförmigen Elektrode 10. Konzentrisch und im Abstand zur Elektrode 10 verläuft ein Stahlrohr 12, das nach innen vorspringende vereinzelte Noppen aufweist, die zur Zentrierung der Elektrode 10 innerhalb des Rohrs 12 dienen.

Das Rohr wird von einem feuerfesten, keramischen Körper 16 eingefaßt, der die Form eines Hohlzylinders besitzt.

Die Baueinheit aus Elektrode 10 und feuerfestem keramischen Körper 16 bildet die erfindungsgemäße Spülelektrode, die beispielsweise über eine Mörtelfuge 18 in einer Aufnahme 20 bodenseitig angeordnet wird, wobei die Aufnahme 20 im wesentlichen die Form und Funktion eines (bekannten) Lochsteins übernimmt.

Wie sich Figur 1b entnehmen läßt, ist das Rohr 12 nach unten über die untere Stirnfläche 22 des Körpers 16 hinaus verlängert und über einen Boden 12a mit Gasanschlußstutzen 24 ausgebildet. Auf diese Weise entsteht eine Gasverteilkammer 26, die das über den Gasanschlußstutzen 24 zugeführte Gas (im Betrieb) zunächst über die Querschnittsfläche des Rohrs 12 verteilt, so daß das Behandlungsgas, zum Beispiel Argon, anschließend über den Ringspalt 28 zwischen Elektrode 10 und Rohr 12 zur oberen Stirnfläche 30 und von dort in die Metallschmelze gelangt.

Der Boden 12a der Gasverteilkammer 26 weist zwei abgedichtete Öffnungen 12b, 12c auf. Durch die Öffnung 12b ragt eine elektrische Anschlußklemme 32, über die die Elektrode 10 an die Stromversorgung angeschlossen wird. Durch die Öffnung 12c ragt ein Metallröhrchen 34, das sich über eine endliche Strecke in die Elektrode 10 hineinerstreckt und an seinem unteren, freien Ende an eine (nicht dargestelle) Gasdruckquelle anschließbar ist.

Nach dem Einbau der Spülelektrode in den Boden eines Gleichstromofens wird das Röhrchen 34 mit Gas/Luft beaufschlagt. Das Gas kann jedoch nicht über das obere freie Ende des Röhrchens 34 entweichen, weil die anschließende Elektrode 10 gasdicht ist. Kommt es jedoch zu einem Verschleiß der Spülelektrode bis in den Bereich des oberen freien Endes des Röhrchens 34, so schmilzt der Abschlußbereich des Röhrchens 34 auf und das Gas strömt aus, was über ein entsprechendes Manometer angezeigt wird. Das Metallröhrchen 34 erfüllt damit die Funktion eines Sensors zur Verschleißanzeige der Spülelektrode.

Die in den Figuren 1a, b dargestellte Ausführungsform ist nach Art eines "Schlitzspülers" aufgebaut, wobei das über den Ringspalt 28 in die Metallschmelze zugeführte Behandlungsgas gleichzeitig die Elektrode 10, die hier aus Kupfer besteht, kühlt.

Die Ausführungsform nach Figur 2 unterscheidet sich von der nach Figur 1 dadurch, daß die Kupferelektrode 10 unmittelbar vom keramischen Körper 16 umschlossen wird, so daß hier kein Ringspalt (Gasspalt) entsteht.

Eine Gaszuführung wird vielmehr dadurch erreicht, daß die Elektrode 10 selbst mit einer Vielzahl von Längsbohrungen 10a ausgebildet ist, die sich über die gesamte Höhe der Elektrode 10 erstrecken. Man könnte die Elektrode 10 in Anlehnung an die Terminologie keramischer Gasspülsteine auch als Elektrode mit "gerichteter Porosität" bezeichnen.

Auch beim Ausführungsbeispiel nach Figur 2 ist der Bodenbereich der Elektrode 10 nach unten verlängert, so daß eine Gasverteilkammer ausgebildet wird (nicht dargestellt), über die das Behandlungsgas durch die Kanäle 10a in die Metallschmelze geführt wird.

Durch eine mehr oder weniger statistische Verteilung der Gaskanäle 10a in der Elektrode 10 wird eine noch höhere Kühlwirkung als beim Ausführungsbeispiel nach Figur 1 erreicht.

Durch Ausbildung des keramischen Körpers 16 gerichteter oder ungerichteter Porosität und entsprechende Erweiterung der Querschnittsfläche der Gasverteilkammer oder Ausbildung einer zweiten Gasverteilkammer für den Bereich des porösen keramischen Körpers 16 läßt sich die Spül- und Kühlleistung weiter erhöhen.

Selbstverständlich wäre auch eine Kombination der Ausführungsformen nach den Figuren 1 und 2 denkbar, also die Ausbildung eines Ringspaltes zwischen der gasspülenden Elektrode 10 nach Figur 2 und dem äußeren keramischen Hohlzylinder 16.

Eine weitere Ausführungsvariante zeigt Figur 3. Innerhalb des keramischen Körpers 16 sind hier insgesamt fünf Elektroden 10 angeordnet, die - ähnlich wie beim Beispiel nach Figur 1 - jeweils in einem eigenen Metallrohr 12 über entsprechende Noppen 14 positioniert sind.

Die Stahlzylinder 12 sind wie beim Ausführungsbeispiel nach Figur 1 im Körper 16 vermörtelt.

Es ist selbstverständlich, daß die insgesamt fünf Elektroden 10 nach Figur 3 bodenseitig entsprechende Anschlußklemmen an die elektrische Stromversorgung aufweisen.

Die Gasverteilkammer ist wiederum ähnlich wie vorstehend beschrieben gestaltet, erstreckt sich hier aber über die gesamte Querschnittsfläche des keramischen Körpers 16. Zu diesem Zweck wird der Körper 16 in seinem unteren Abschnitt in einem Blechmantel konfektioniert, der bodenseitig über die untere Stirnfläche 22 hinaus zur Ausbildung der Gasverteilkammer verlängert wird.

Gerade bei der Ausführungsform nach Figur 3 bietet es sich an, auch den keramischen Körper 16 mit gerichteter oder ungerichteter Porosität zu gestalten, weil der Gasdruck aufgrund der Gestaltung der Gasverteilkammer ohnehin über die gesamte Querschnittsfläche des Körpers 16 wirkt.

Eine Reststärkenanzeige 34 wie nach Figur 1b ist auch hier im keramischen Matrixmaterial des Körpers 16 integriert.

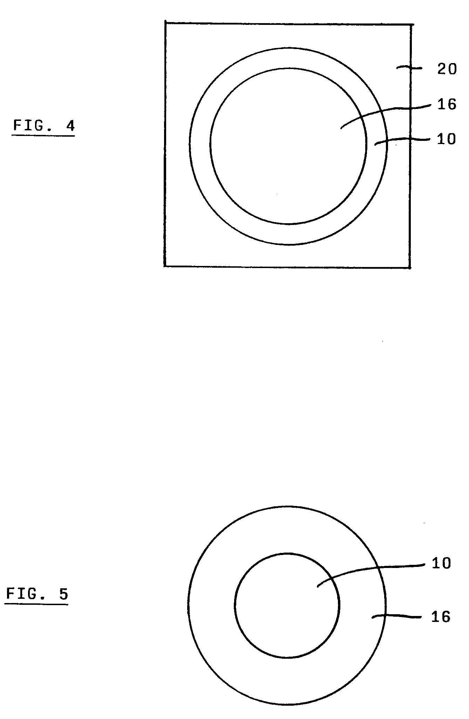

Zwei einfachere Ausführungsvarianten zeigen die Figuren 4, 5.

Nach Figur 4 ist die Elektrode 10 als Hohlzylinder gestaltet und mit einem feuerfesten keramischen Matrixmaterial 16 verfüllt. Die Elektrode 10 wird außenseitig unmittelbar in eine lochsteinähnliche Aufnahme 20 eingemörtelt.

Auch hier verläuft eine Gasverteilkammer unterhalb des eigentlichen Spülkörpers, und zwar in Verlängerung der äußeren Umfangsfläche der Elektrode 10. Sowohl die Elektrode 10 als auch der innere keramische Körper 16 sind mit gerichteten Poren ausgebildet (nicht dargestellt).

Beim Ausführungsbeispiel nach Figur 5 ist eine Elektrode 10 in einem hohlzylinderförmigen keramischen Körper 16 mit ungerichteter Porosität konfektioniert.

Eine ringförmige Gasverteilkammer wird in diesem Fall dadurch ausgebildet, daß sowohl die Elektrode 10 als auch der Körper 16 in einer Stahlmanschette konfektioniert sind, die über die untere Stirnfläche beider Teile verlängert ist und einen Boden aufweist, in dem ein Gasanschlußrohr angeordnet ist.

Die Anschlußklemme für die Elektrode 10 wird in diesem Fall nicht durch die Gasverteilkammer hindurchgeführt, sondern verläuft unmittelbar in Verlängerung der Elektrode 10.

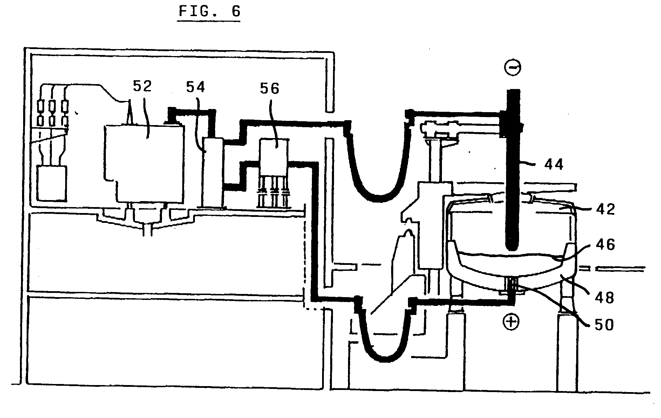

Figur 6 zeigt den prinzipiellen Aufbau eines Gleichstromofens für metallurgische Zwecke.

Zu erkennen ist der Ofen 40, durch dessen Deckel 42 eine als Anode geschaltete Graphitelektrode 44 ragt, die im Abstand oberhalb des metallurgischen Badspiegels 46 endet.

Im Boden 48 aus feuerfestem Material ist (in gedachter axialer Verlängerung der Elektrode 44) ein Gasspülstein 50 der vorstehend beschriebenen Art angeordnet, dessen Elektrode 10 als Kathode geschaltet ist.

Zu erkennen sind auch die von den ELektroden 10, 44 verlaufenden elektrischen Anschlußelemente sowie ein Transformator 52, ein Gleichrichter 54 sowie eine Glättungsdrossel 56.

## Patentansprüche

1. Gasspülstein für Elektro-Lichtbogenöfen mit mindestens einer, sich in Spülrichtung des Behandlungsgases innerhalb des feuerfesten Matrixmaterials (16, 20) erstreckenden Elektrode (10), die am gaseinlaßseitigen Ende des Spülsteins (50) an eine Stromquelle anschließbar ist.

2. Gasspülstein nach Anspruch 1, bei dem die Elektrode(n) (10) stabförmig gestaltet ist (sind).

3. Gasspülstein nach Anspruch 1 oder 2, bei dem die Elektrode(n) (10) mindestens eine, vorzugsweise in Längsrichtung verlaufende Durchbohrung (10a) aufweist (aufweisen).

4. Gasspülstein nach Anspruch 1 oder 2, bei dem die Elektrode(n) (10) mit ungerichteter Porosität ausgebildet ist (sind).

5. Gasspülstein nach einem der Ansprüche 1 bis 4, bei dem die Elektrode(n) (10) über ihre gesamte Längserstreckung von einem Ringkanal (28) umgeben und über Zentrierelemente (14) innerhalb des Ringkanals (28) gegenüber dem feuerfesten Matrixmaterial (16) positioniert ist (sind).

6. Gasspülstein nach einem der Ansprüche 1 bis 5, mit einer Elektrode (10), deren Mittenlängsachse mit der Mittenlängsachse des durch das feuerfeste Matrixmaterial (16) definierten Spülsteins identisch ist.

7. Gasspülstein nach einem der Ansprüche 1 bis 5 mit mehreren Elektroden (10), deren jeweilige Mittenlängsachsen zur Mittenlängsachse des durch das feuerfeste Matrixmaterial (16) definierten Spülsteins parallel verlaufen.

8. Gasspülstein nach einem der Ansprüche 1 bis 5, bei dem die Elektrode(n) unter einem Winkel zur Mittenlängsachse des durch das feuerfeste Matrixmaterial definierten Spülsteins verlaufen.

9. Gasspülstein nach einem der Ansprüche 1 bis 8, bei dem die Elektrode(n) (10) und/oder das feuerfeste Matrixmaterial (16) am gaseinlaßseitigen Ende des Spülsteins (50) einzeln oder gemeinsam an eine Gasquelle anschließbar ist (sind).

10. Gasspülstein nach einem der Ansprüche 1 bis 9, bei dem jeder, eine Elektrode (10) umgebende Ringkanal (28) am gaseinlaßseitigen Ende des Spülsteins (50) an eine eigene Gasquelle anschließbar ist.

11. Gasspülstein nach einem der Ansprüche 1 bis 10 mit einem, mit gerichteten Poren ausgebildeten feuerfesten Matrixmaterial (16).

12. Gasspülstein nach einem der Ansprüche 1 bis 10 mit einem, mit ungerichteten Poren ausgebildeten feuerfesten Matrixmaterial.

13. Gasspülstein nach einem der Ansprüche 1 bis 12 mit mindestens einer, am gaseinlaßseitigen Ende des Spülsteins (50) ausgebildeten Gasverteilkammer (26), die an eine Gasquelle anschließbar ist und eine Öffnung (12b) zum gasdichten Anschluß der Elektrode(n) (10) an die Spannungsquelle (52, 54, 56) aufweist.

14. Gasspülstein nach einem der Ansprüche 1 bis 13 mit einer, in der Elektrode (10) und/oder dem feuerfesten keramischen Körper (16) integrierten Einrichtung (34) zur Reststärkenanzeige.

15. Gasspülstein nach einem der Ansprüche 1 bis 14, bei dem die Elektrode(n) (10) zum Anschluß an eine Gleichspannungsquelle ausgebildet ist (sind).

16. Gasspülstein nach einem der Ansprüche 1 bis 15, bei dem die Elektrode(n) aus Stahl besteht (bestehen).

17. Elektro-Lichtbogenofen für Schmelzprozesse mit mindestens einer Lichtbogenelektrode (44) und mindestens einem Gasspülstein (50) nach einem der Ansprüche 1 bis 16 im Abstand zur Lichtbogenelektrode (44).

18. Ofen nach Anspruch 17, bei dem der Gasspülstein (50) in (gedachter) axialer Verlängerung der Lichtbogenelektrode (44) angeordnet ist.

19. Ofen nach Anspruch 17, bei dem mehrere Gasspülsteine in gleichem Winkelabstand zueinander auf einem gedachten Kreis angeordnet sind, dessen Mittelpunkt in einer gedachten axialen Verlängerung der Lichtbogenelektrode liegt.

20. Ofen nach einem der Ansprüche 17 bis 19, bei dem die Lichtbogenelektrode (44) und der (die) Gasspülstein(e) (44) an eine Gleichstromquelle anschließbar sind.

## Claims

1. Gas purging plug for electric-arc furnaces with at least one electrode (10), which extends in the direction of purging of the treating gas within the refractory matrix material (16, 20), and which can be connected, at the gas inlet-side end of the plug (50), to a power source.

2. Gas purging plug in accordance with claim 1, in which the electrode(s) (10) is (are) of rod-shaped design.

3. Gas purging plug in accordance with claim 1 or 2, in which the electrode(s) has (have) at least one penetrating bore (10a) extending preferably in the longitudinal direction.

4. Gas purging plug in accordance with claim 1 or 2, in which the electrode(s) is (are) provided with nonoriented porosity.

5. Gas purging plug in accordance with one of the claims 1 through 4, in which the electrode(s) (10) is (are) surrounded by an annular canal (28) over its (their) entire longitudinal extension and is (are) positioned via centering elements (14) within the annular canal (28) against the refractory matrix material (16).

6. Gas purging plug in accordance with one of the claims 1 through 5, with an electrode (10), whose central longitudinal axis is identical to the central longitudinal axis of the plug defined by the refractory matrix material (16).

7. Gas purging plug in accordance with one of the claims 1 through 5, with a plurality of electrodes (10), whose respective central longitudinal axes extend in parallel to the central longitudinal axis of the plug defined by the refractory matrix material (16).

8. Gas purging plug in accordance with one of the claims 1 through 5, in which the electrode(s) extends (extend) at an angle to the central longitudinal axis of the plug defined by the refractory matrix material.

9. Gas purging plug in accordance with one of the claims 1 through 8, in which the electrode(s) (10) and/or the refractory matrix material (16) can be connected individually or together, at the gas inlet-side end of the plug (50), to a gas source.

10. Gas purging plug in accordance with one of the claims 1 through 9, in which each annular canal (28) surrounding an electrode (10) can be connected, at the gas inlet-side end of the plug (50), to a separate gas source.

11. Gas purging plug in accordance with one of the claims 1 through 10, with a refractory matrix material (16) provided with oriented pores.

12. Gas purging plug in accordance with one of the claims 1 through 10, with a refractory matrix material provided with nonoriented pores.

13. Gas purging plug in accordance with one of the claims 1 through 12, with at least one gas distribution chamber (26), which is arranged at the gas inlet-side end of the plug (50), can be connected to a gas source, and has an opening (12b) for gastight connection of the electrode(s) (10) to the power source (52, 54, 56).

14. Gas purging plug in accordance with one of the claims 1 through 13, with a device (34) integrated in the electrode (10) and/or the refractory ceramic body (16) for indicating the residual thickness.

15. Gas purging plug in accordance with one of the claims 1 through 14, in which the electrode(s) (10) is (are) designed for connection to a d.c. power source.

16. Gas purging plug in accordance with one of the claims 1 through 15, in which the electrode(s) consists (consist) of steel.

17. Electric-arc furnace for melting processes, with at last one arc electrode (44) and at least one gas purging plug (50) in accordance with one of the claims 1 through 16 at a spaced location from the arc electrode (44).

18. Furnace in accordance with claim 17, in which the gas purging plug (50) is arranged in the (imaginary) axial extension of the arc electrode (44).

19. Furnace in accordance with claim 17, in which a plurality of gas purging plugs are arranged at equal angular distances from one another on an imaginary circle, whose center is located in an imaginary axial extension of the arc electrode.

20. Furnace in accordance with one of the claims 17 through 19, in which the arc electrode (44) and the gas purging plug(s) (44) can be connected to a d.c. power source.

## Revendications

1. Brique de balayage de gaz, destinée à des fours électriques à arc, avec au moins une électrode (10), s'étendant dans la direction du balayage du gaz de traitement à l'intérieur du matériau de matrice (16, 20) réfractaire et pouvant être raccordée à une source électrique à l'extrémité, située coté entrée du gaz, de la brique de balayage (50).

2. Brique de balayage selon la revendication 1, dans laquelle la ou les électrode (s) (10) est (sont) en forme de barres.

3. Brique de balayage de gaz selon la revendication 1 ou 2, dans laquelle la ou les électrode (s) (10) présente(nt) au moins un perçage traversant (10a) s'étendant de préférence dans la direction longitudinale.

4. Brique de balayage de gaz selon la revendication 1 ou 2, dans laquelle la ou les électrode (s) (10) est (sont) réalisée(s) avec une porosité non directionnelle.

5. Brique de balayage de gaz selon l'une des revendications 1 à 4, dans laquelle la ou les électrode (s) (10) est (sont) entourée(s) sur la totalité de leur longueur par un canal annulaire (28) et est (sont) positionnée(s) vis-à-vis du matériau de matrice (16) réfractaire, par l'intermédiaire d'éléments centreur (14), à l'intérieur du canal annulaire (28).

6. Brique de balayage de gaz selon l'une des revendications 1 à 5, avec une électrode (10) dont l'axe longitudinal est identique à l'axe longitudinal de la brique de balayage définie par le matériau de matrice (16) réfractaire.

7. Brique de balayage de gaz selon l'une des revendications 1 à 7, avec plusieurs électrodes (10), dont les axes longitudinaux respectifs s'étendent parallèlement à l'axe longitudinal de la brique de balayage définie par le matériau de matrice (16) réfractaire.

8. Brique de balayage de gaz selon l'une des revendications 1 à 5 dans laquelle la ou les électrode (s) s'étende (nt) en faisant un angle par rapport à l'axe longitudinal de la brique de balayage définie par le matériau de matrice.

9. Brique de balayage de gaz selon l'une des revendications 1 à 8, dans laquelle la ou les électrode (s) (10) et/ou le matériau de matrice (16) réfractaire est (sont) susceptible(s) d'être raccordé(s) individuellement ou conjointement à une source de gaz, à l'extrémité, située coté entrée du gaz, de la brique de balayage (50).

10. Brique de balayage de gaz selon l'une des revendications 1 à 9, dans laquelle chaque canal annulaire (28) entourant l'électrode (10) peut être raccordé à une source de gaz propre, à l'extrémité, située coté entrée du gaz, de la brique de balayage (50).

11. Brique de balayage de gaz selon l'une des revendications 1 à 10, avec un matériau de matrice (7) réfractaire réalisé avec des pores orientés.

12. Brique de balayage de gaz selon l'une des revendications 1 à 10, avec un matériau de matrice réfractaire réalisé avec des pores non orientés.

13. Brique de balayage de gaz selon l'une des revendications 1 à 12, avec au moins une chambre de distribution de gaz (26), ménagée à l'extrémité coté entrée du gaz, de la brique de balayage (50), pouvant être raccordée à une source de gaz et présentant une ouverture (12b) permettant un raccordement, étanche aux gaz, de la ou des électrode (s) (10) à la source électrique (52, 54, 56).

14. Brique de balayage de gaz selon l'une des revendications 1 à 13, avec un dispositif (34) intégré dans l'électrode (10) et/ou dans le corps (16) céramique réfractaire, destiné à indiquer l'épaisseur résiduelle.

15. Brique de balayage de gaz selon l'une des revendications 1 à 14, dans laquelle la ou les électrode (s) (10) est (sont) réalisée(s) pour le raccordement à une source de courant continue.

16. Brique de balayage de gaz selon l'une des revendications 1 à 15, dans laquelle la ou les électrode (s) est(sont) en acier.

17. Four électrique à arc, pour processus de fusion, avec au moins une électrode d'arc électrique (44) et au moins une brique de balayage de gaz (50) selon l'une des revendications 1 à 16, placée à distance de l'électrode d'arc électrique (44).

18. Four selon la revendication 17, dans lequel la brique de balayage de gaz (50) est disposée dans le prolongement axial (imaginaire) de l'électrode d'arc électrique (44).

19. Four selon la revendication 17, dans lequel plusieurs briques de balayage de gaz sont disposées à distance, suivant un espacement angulaire identique l'une par rapport aux autres, sur un cercle imaginaire dont le centre est situé dans le prolongement axial imaginaire de l'électrode d'arc électrique.

20. Four selon l'une des revendications 17 à 19, dans lequel l'électrode d'arc électrique (44) la ou les briques de balayage au gaz (44) peuvent être raccordée(s) à une source de courant continue.
